(19) Europäisches Patentamt
European Patent Office
Office européen des brevets

(11) Publication number: 0 140 312 B1

(12) EUROPEAN PATENT SPECIFICATION

(45) Date of publication of patent specification: 01.03.89

(51) Int. Cl.[4]: H 01 M 12/06, H 01 M 4/62, H 01 M 4/86, H 01 M 4/42

(21) Application number: 84112658.4

(22) Date of filing: 19.10.84

# (54) Organic siliconate additive for alkaline zinc electrochemical cells.

(30) Priority: 19.10.83 US 543429

(43) Date of publication of application: 08.05.85 Bulletin 85/19

(45) Publication of the grant of the patent: 01.03.89 Bulletin 89/09

(84) Designated Contracting States: BE CH DE FR GB IT LI NL SE

(56) References cited:
EP-A-0 058 088
EP-A-0 058 089
EP-A-0 058 090

CHEMICAL ABSTRACTS vol. 99, no. 16, October 17, 1983, Columbus, Ohio, U.S.A. Toshiba Corp. "Air cathodes" page 181

(73) Proprietor: RAYOVAC CORPORATION
601 Rayovac Drive
Madison Wisconsin 53711 (US)

(72) Inventor: Dopp, Robert Brian
630 Forward Drive
Madison Wisconsin 53711 (US)

(74) Representative: Wuesthoff, Franz, Dr.-Ing. et al
Patentanwälte Wuesthoff -v. Pechmann-Behrens-Goetz Schweigerstrasse 2
D-8000 München 90 (DE)

EP 0 140 312 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of Invention

This invention relates to zinc electrochemical cells having metallic zinc anodes and air cathodes, commonly known as zinc-air cells.

Zinc-air cells are electrochemical cells wherein the oxygen in the air acts as the cathode material and amalgamated zinc is the anode material. Air enters the electrochemical cell through ports on one side of the cell, is allowed to diffuse through a catalytic layer where the oxygen reacts with water to form hydroxide ions which react with metallic zinc in an alkaline environment to produce the electric energy.

Background of Invention

In zinc-air cells, air enters the cell through port(s) in the cell which are immediately adjacent to a cathode assembly. The air diffuses into an air cathode sub-assembly where the oxygen is reacted. This air cathode sub-assembly generally consists of mixtures of activating chemicals supported by a complex physical structure. The air cathode sub-assembly also slows the diffusion of other gases, particularly carbon dioxide and water vapor, through the electrode to the reaction site. Other gases in air, particularly water vapor, have a profound limiting effect on the capacity of the cell.

The activated oxygen diffuses through a separtor, a moisture barrier usually of a plastic-like material impervious to liquids such as the alkaline electrolyte, and reacts with the water in the electrolyte, consuming electrons and producing hydroxide ions. These ions then oxidize the metallic zinc, generally producing 2 electrons for each atom of zinc reacted. Such air cathode electrochemical cells are well known (US—A—3,149,900 and 3,276,909).

It is well known that the limit to the efficiency of zinc-air cells below the theoretical rate capacity is due to 2 different factors. Initially, the cell efficiency is limited by the cathode. The rate of mass transport of the oxygen into the cathode limits the reaction of the oxygen with water in the alkaline environment. The present invention, however, is not directed to electrochemical cell rate capacity limitations due to the cathode.

The present invention is directed to the reduction in cell efficiency which occurs after the zinc-air cell has been substantially discharged. This limitation in rate capacity is related to events occurring in the zinc anode during discharge. As zinc is oxidized, a zinc oxide layer forms on the surface of the metallic zinc. Zinc oxide is a known poor conductor of electricity. As the cell continues to discharge, the zinc oxide layer grows. As the zinc oxide layer grows, the internal conductivity and therefore the rate capacity decreases. The rate capacity is further limited by side reactions which compete with the main reaction for the metallic zinc. These side reactions consume zinc without producing any free electrons. A very rate limiting side reaction is:

$$Zn + H_2O \xrightarrow{\text{catalyst}} ZnO + H_2\uparrow$$

Water, the solvent of the electrolyte, is a readily available reactant. The production of the hydrogen gas quickly increases the internal pressure of the zinc-air cell, whic can cause the seals of the cell to fail, resulting in a leakage of electrolyte. This rate limiting reaction appears to be catalyzed by carbon. Therefore, carbon, which is often present in the cathode assembly, must be isolated from the zinc reduction zones. The presence of carbon in the zinc anode assembly, even in trace amounts, greatly increases the rate of hydrogen gas formation.

From Chemical Abstracts Vol. 99, No. 16, October 17, 1983, page 181, column 2, abstract No. 125664*V*, corresponding to JP—A—8359562, not closer defined cells with air cathodes are known, with a membrane being present on the cathode. This membrane is a porous layer impregnated with fluoro compounds sandwiched between two gas-permeable layers. These gas-permeable layers consist of a polysiloxane.

The objective of the present invention is to extend the capacity of zinc-air button cell by lessening the effects of the rate limitations which originate in the zinc anode.

Summary of the Invention

The objective of the present invention is achieved by bringing polysiloxanes (organic siliconate) containing up to 6 carbon atoms in the organic groups in contact with the anode of zinc-air cells. According to the present invention, an alkaline electrochemical cell comprising an air cathode sub-assembly with a means for supplying air to the cathode sub-assembly, a zinc anode, an electrolyte in contact with the zinc anode and a non-metallic separator between the cathode and the anode is characterized in that the anode is in contact with an organopolysiloxane containing up to 6 carbon atoms in the organic groups. The polysiloxanes may be introduced to the zinc anode as an additive to the electrolyte, as a coating on the metallic zinc, or as an additive or coating on the non-metallic barrier which contacts the electrolyte containing in the zinc anode. The amount or organic polysiloxanes necessary to practice this invention ranges from trace amounts up to 50 ppm silicon (from organic polysiloxanes versus zinc weight). The amount of silicon is 20 to 100 ppm in the case of carbon-laced zinc anodes. While the invention can be practiced with organic polysiloxanes generally dimethylpolysiloxanes are preferred.

The introduction of organic polysiloxanes increases the capacity of zinc-air cells. While the mechanism is not fully understood, it is believed that the organic polysiloxanes reduce the rate of formation of the crystalline structure of the zinc layer on the surface of the metallic zinc by coating the surfaces of the amalgamated zinc.

According to the proposed mechanism, the organic groups incorporated in the polysiloxane compound give the zinc increased surface activity, while maintaining a high level of surface stability. Since the reaction rate is proportional to the number of reaction sites, the decreased formation of zinc oxide increases the number of reaction sites within the anode. The decreased formation of zinc oxide also reduces the internal charge resistance within the anode.

An unexpected result of this invention is the effect of organic polysiloxanes on carbon, a heretobefore known poison of zinc anodes. The use of organic polysiloxanes as disclosed by this invention stops the poisoning effect of carbon on zinc anodes, even when carbon is present in the zinc anode in amounts of up to 500 ppm versus zinc weight. In fact, the presence of carbon in zinc anodes, when organic polysiloxanes are used according to the present invention, may actually increase the rate capability of zinc-air cells. This increase in the capacity probably stems from a reduction in charge resistance within the anode, since carbon is a known conductivity enhancer. The organic polysiloxanes of the present invention appear to affect the ability of carbon to catalyze the reaction of zinc and water to zinc oxide and hyrogen gas without affecting the charge conductivity properties of carbon.

Since it is shown to extend the capacity of zinc-air cells, the present invention, *i.e.*, the use of organic polysiloxanes in the zinc anode, includes the use of carbon-laced zinc anodes in zinc-air button cells. The amount of carbon which can be added to the zinc anode according to the present invention varies up to 500 ppm versus zinc weight when the silicon (introduced as organic polysiloxanes) contained in the botton cell is increased to approximately 0.01% of the zinc by weight.

The invention is applicable to all alkaline cells as claimed in the appended claims, including zinc-mercury, zinc-silver and zinc-manganese dioxide alkaline cells.

While the present invention relates to zinc-air cells generally and other zinc anode cells, it is particularly adapted to zinc-air button cells. The term button cells has been adopted for very small, disc-like electrochemical cells. Button cells, which are approximately the size of garment buttons, have diameters ranging up to about 25 mm and heights ranging up to about 15 mm. Button cells are used as power sources for a wide variety of devices, including watches, calculators, hearing aids, and many other electric devices requiring low power, long-lasting sources of energy.

The power generating electrochemical reactions which take place in button cells, because of their minute dimensions, must be efficient and complete. To obtain the maximum cell efficiency, any button cell reactant which cannot be replaced (*e.g.* metallic zinc) must be completely consumed. Because of the limited size of button cells, and the corresponding limited amounts of reactants, very small changes in the amount of reactants, reaction poisons, catalysts, etc., will have profound effects on the capacity of button cells. Similarly the generation of side products, albeit from incomplete "good" reactions or undesired reactions, will lead to a rapid increase in internal cell pressure. Therefore, the increases in cell efficiency resulting from applying the teachings of the present invention are magnified in button cells.

Zinc-air button cells are normally constructed in two steps; the anode section and the cathode section of zinc-air button cells are usually separately assembled and then joined together prior to the cell being permanently sealed.

Generally, the cathode section is contained in a topless, hollow metallic can with a small air entry hole in the can bottom. The air cathode subassembly, which is covered with a non-metallic separator, is slightly compressed within the cathode section.

The zinc anode section consists of a topless, hollow metallic can into which a measured amount of zinc is placed. An alkaline electrolyte is then metered directly onto the surface of the zinc.

After the electrodes have been made, they are joined by inverting the cathode section and placing it in the open end of the anode can. The button cell is then sealed, usually by crimping the edges into a non-metallic grommet Figure 1 shows the conventional zinc air button cell.

The disclosed benefits of the present invention were measured by comparative tests of standard, commercial RAYOVAC zinc-air button cells (rated capacity-400 mA . h) and zinc-air button cells in which dimethyl polysiloxanes are an additive to the electrolyte, but otherwise identical to the standard commercial cells. The dimethyl polysiloxane-doped electrolyte used in the test cells was prepared as follows:

1. 1.42% by weight of DOW CORNING 193 (a silicon glycol copolymer surfactant, CTFA name: dimethicone copolyol) was added to the standard electrolyte (*i.e.*, 30%KOH, 2% ZnO in water).
2. The mixture was stirred vigorously for 24 hours, then allowed to stand for 1 week.
3. The clear lower fluid (stock dimethyl polysiloxanes doped electrolyte) was physically separated from the oily surface layer.
4. The desired amount of dimethyl polysiloxanes (versus zinc weight) was introduced to the zinc anode by mixing together M parts stock dimethyl polysiloxanes doped electrolyte and 100—M parts stock standard electolyte where M = (ppm of silicone wanted) × (zinc wt./electrolyte wt.)/13.602.

Test 1:

A cell containing 5 ppm silicon (introduced as dimethyl polysiloxanes) versus zinc weight was

constructed according to the present invention. To study the effect on discharge of the methyl siliconate, a 625 Ω load was applied to a control cell and the test cell containing 5 ppm silicon. The potential in volts as a function of time in hours was measured. As shown in Figure 2, the discharge curves were identical for the first 180 hours. After that, the control cell more quickly reached the voltage end point (VEP) (1.1 volts). Therefore, Figure 2 shows that the increased efficiency of cells constructed according to this invention results in an increase in capacity attributable to increased zinc anode efficiency.

Test 2:

A series of cells were constructed according to the present invention with varying amounts of dimethyl polysiloxanes incorporated therein as described by the above procedure. A 625 Ω load was applied to each cell and the capacity (mA.h), to the voltage end point (1.1 V), was measured. It was found that as the amount of silicon in the cell, introduced dimethyl polysiloxanes, increased from 0 ppm up to approximately 2.0 ppm versus zinc weight, the increased concentration of silicon linearly increased the capacity of the zinc-air button cell. At concentrations > 2.0 ppm, there was no appreciable increase in capacity with increased silicon concentration versus zinc weight. Figure 3 graphically present the results of these tests.

The effects of carbon on zinc-air button cells was also measured. These tests confirmed that, the present invention prevents carbon poisoning of zinc anodes.

Test 3:

Various amounts of activated carbon were added to the amalgamated zinc during the manufacture of the standard, commerical RAYOVAC zinc-air button cells of Test 1. There was no other deviation from the normal construction of the commercial cells. The cells were tested by applying a 625-Ω continuous drain and the capacity was measured as a function of ppm carbon in zinc. As Figure 4 shows, there is no change in the capacity of the zinc-air button cell when less than about 100 ppm of carbon is added to the amalgamated zinc of the zinc anode. However, the presence of 200 ppm carbon in the zinc anode cuts the rate in half and when 300 ppm of carbon is added to the zinc-air button cell, the cell does not function at all. Figure 4 conclusively shows the dramatic effect of carbon poisoning on zinc-air button cells.

Test 4:

A series of cells were constructed according to the present invention with varying amounts of dimethyl polysiloxanes therein added to the electrolyte, wherein 300 ppm carbon versus zinc weight has been mixed with amalgamated zinc. The capacity, to the voltage end point was then measured under both 150 Ω and 625 Ω loads. Figure 5 shows that dimethyl polysiloxanes is an effective antidote for carbon poisoning in zinc air cells (where the zinc anode is laced with 300 ppm of carbon), when the amount of silicon from the dimethyl polysiloxanes is at least 30 ppm versus zinc weight.

**Claims**

1. An alkaline electrochemical cell comprising an air cathode sub-assembly with a means for supplying air to the cathode sub-assembly, a zinc anode, an electrolyte in contact with the zinc anode and a non-metallic separator between the cathode and the anode, characterized in that the anode is in contact with an organopolysiloxane containing up to 6 carbon atoms in the organic groups.

2. An alkaline electrochemical cell as in claim 1 which is a sealed button cell comprising:

(a) a cathode can having an air entry port in the bottom, containing an air cathode sub-assembly and a non-metallic separator and

(b) an anode can containing an electrolyte and zinc anode optionally comprising amalgamated zinc or carbon-laced zinc anode,

wherein the cathode can and the anode can are mated such that the non-metallic separator is between the air cathode sub-assembly and the anode.

3. An alkaline electrochemical cell as in claim 1 or 2, wherein the separator is coated with an adhesive material.

4. The alkaline electrochemical cell as in claim 1, 2 or 3 wherein the organic polysiloxianes are present as an additive to the electrolyte or as a coating on the zinc anode or as an additive to the adhesive material coating the separator, respectively.

5. The alkaline electrochemical cell as in claim 1 to 4, wherein the organic polysiloxanes are methyl polysiloxanes.

6. The alkaline electrochemical cell as in claim 4, wherein the polysiloxanes contained in the electrolyte where obtained by adding the polysiloxanes to a standard electrolyte and thereafter discarding the oily surface layer formed thereon, the electrolyte comprising a clear lower fluid fraction of a mixture of potassium hydroxide and zinc oxide in water including a polysiloxane which is a silicon glycol copolymer.

7. The alkaline electrochemical cell as in claim 1 to 5, wherein the amount of organic polysiloxanes ranges from trace amounts up to 50 ppm silicon versus zinc weight in the case of a zinc anode and 20 to 100 ppm in the case of a carbon-lacted zinc anode.

8. An alkaline electrochemical cell as in claim 2, wherein the amount of carbon in the anode ranges up to 500 ppm versus zinc weight.

9. The alkaline electrochemical cell as in claims 1 to 8, wherein the cathode is selected from mercury, silver and manganese dioxide.

10. The alkaline electrochemical cell as in claim

9, wherein the anode is amalgamated zinc and includes activated carbon.

**Patentansprüche**

1. Alkalische elektrochemische Zelle mit Luftkathoden-Anordnung mit Luftzuführung zu dieser, einer Zink-Anode, einem Elektrolyten in Berührung mit der Zink-Anode und einem nichtmetallischen Separator zwischen Kathode und Anode, dadurch gekennzeichnet, daß die Anode mit einem Organopolysiloxan enthaltend bis zu 6 Kohlenstoffatomen in den Organogruppen in Berührung steht.

2. Alkalische elektrochemische Zelle nach Anspruch 1, welche als abgedichtete Konpfzelle ausgeführt ist, enthaltend

(a) einem Kathoden-Napf mit einer Luftzuführung in den Boden, enthaltend eine Luftkathoden-Anordnung und einen nicht-metallischen Separator und

(b) einen Anoden-Napf, enthaltend einen Elektrolyt und die Zinc-Anode, die gegebenenfalls amalgamiertes Zink enthält oder eine mit Kohlenstoff umgebene Zink-Anode sein kann,

und Kathoden- und Anodennapf so angeordnet sind, daß sich der nichtmetallische Separator zwischen der Luftkathoden-Anordnung und der Anode befindet.

3. Alkalische elektrochemische Zelle nach Anspruch 1 oder 2, wobei der Separator mit einem Klebstoff überzogen ist.

4. Alkalische elektrochemische Zelle nach Anspruch 1, 2 oder 3, worin die Organopolysiloxane als Zusatz zu dem Elektrolyten, als Überzug auf der Zink-Anode bzw. als Zugabe zu dem Kleberüberzug des Separators vorliegen.

5. Alkalische elektrochemische Zelle nach Anspruch 1 bis, 4, worin die Organopolysiloxane Methylpolysiloxane sind.

6. Alkalische elektrochemische Zelle nach Anspruch 4, worin die in dem Elektrolyten enthaltenen Polysiloxane erhalten worden sind durch Zugabe der Polysiloxane zu einem Standard-Elektrolyten, worauf die gebildete ölige Oberflächenschicht verworfen worden ist, der Elektrolyte eine klare leicht bewegliche Flüssigkeit in Form eines Gemischs von Kaliumhydroxid und Zinkoxid in wasser einschließlich eines Polysiloxans ist, welche Letzteres ein Silicon/Glycol-Copolymer darstellt.

7. Alkalische elektrochemische Zelle nach Anspruch 1 bis 5, wobei die Menge an organopolysiloxanen zwischen Spuren und 50 ppm Silicon — bezogen auf das Zinkgewicht im Falle einer Zinkanode — und 20 bis 100 ppm im Falle einer mit Kohlenstoff umgebenen Zinkanode beträgt.

8. Alkalische elektrochemische Zelle nach Anspruch 2, worin der Anteil an Kohlenstoff in der Anode bis zu 500 ppm — bezogen auf das Zinkgewicht — betragen kann.

9. Alkalische electrochemische Zelle nach Anspruch 1 bis 8, worin die Kathode aus Quecksilber, Silber oder Mangandioxid besteht.

10. Alkalische elektrochemische Zelle nach Anspruch 9, worin die Anode amalgamiertes Zink ist und aktiven Kohlenstoff einthält.

**Revendications**

1. Cellule électrochimique alcaline comprenant un sous-assemblage cathodique à air muni d'un dispositif d'introduction d'air dans le sous-assemblage cathodique, une anode en zinc, un électrolyte au contact de l'anode en zinc et un séparateur non métallique entre la cathode et l'anode, caractérisé en ce que l'anode est au contact d'un organopolysiloxane contenant jusqu'à 6 atomes de carbone dans les groupes organiques.

2. Cellule électrochimique alcaline selon la revendication 1, qui est une cellule bouton fermée, comprenant:

(a) une boîte cathodique comportant un orifice d'entrée d'air au fond, contenant un sous-assemblage cathodique à air et un séparateur non métallique et

(b) une boîte anodique contenant un électrolyte et un anode en zinc comprenant éventuellement un anode en zinc amalgamé ou un anode en zinc entrelacé de carbone, dans laquelle la boîte cathodique et la boîte anodique sont accouplées de telle sorte que le séparateur non métallique se trouve entre le sous-assemblage cathodique à air et l'anode.

3. Cellule. électrochimique alcaline selon la revendication 1 ou 2, dans laquelle le séparateur est revêtu d'une substance adhésive.

4. Cellule électrochimique alcaline selon la revendication 1, 2 ou, 3 dans laquelle les polysiloxanes organiques sont présents respectivement comme additif de l'électrolyte ou comme revêtement sur l'anode en zinc ou comme additif de la substance adhésive revêtant le séparateur.

5. Cellule électrochimique alcaline selon les revendications 1 à 4, dans laquelle les polysiloxanes organiques sont des méthylpolysiloxanes.

6. Cellule électrochimique alcaline selon la revendication 4, dans laquelle les polysiloxanes contenus dans l'électrolyte ont été obtenus par addition des polysiloxanes à un électrolyte standard, puis évacuation de la couche huileuse superficielle formée sur celui-ci, l'électrolyte comprenant une fraction fluide inférieure limpide d'un mélange d'hydroxyde de potassium et d'oxyde de zinc dans de l'eau contenant un polysiloxane qui est un copolymère silicone-glycol.

7. Cellule électrochimique alcaline selon les revendications 1 à 5, dans laquelle la quantité de polysiloxanes organiques va de l'état de traces jusqu'à 50 ppm de silicium par rapport au poids de zinc, dans le cas de l'anode en zinc, et de 20 à 100 ppm, dans le cas d'une anode en zinc entrelacé de carbone.

8. Cellule électrochimique alcaline selon la revendication 2, dans laquelle la quantité de carbone dans l'anode s'élève jusqu'à 500 ppm par rapport au poids du zinc.

9. Cellule électrochimique alcaline selon les

revendications 1 à 8, dans laquelle la cathode est choisie parmi le mercure, l'argent et le bioxyde de manganèse.

10. Cellule électrochimique alcaline selon la revendication 9, dans laquelle l'anode est du zinc amalgamé et contient du charbon activé.

ZINC-AIR BUTTON CELL

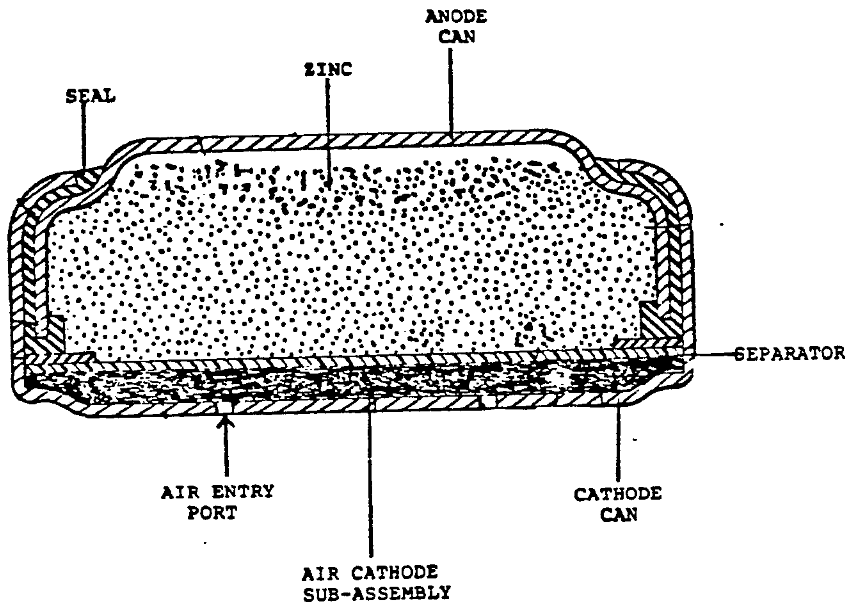


FIGURE 1

EFFECT OF DIMETHYL POLYSILOXANES
DISCHARGE OF RAYOVAC 675A CELLS

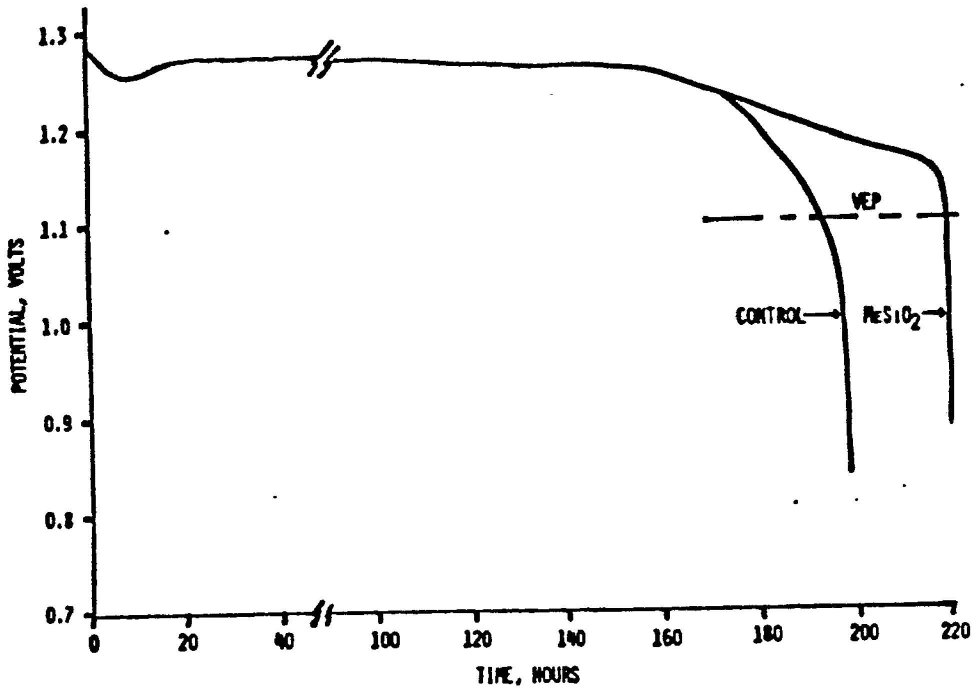


FIGURE 2

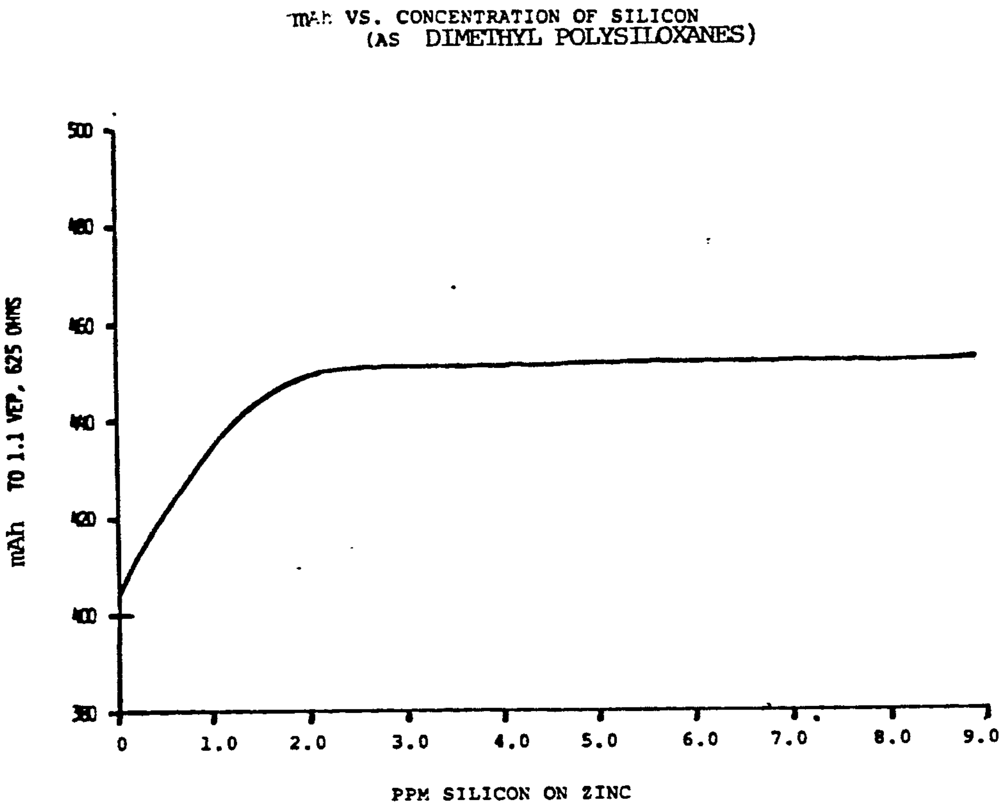
mAh VS. CONCENTRATION OF SILICON
(AS DIMETHYL POLYSILOXANES)
mAh TO 1.1 VEP, 625 OHMS
500
480
460
440
420
400
380
0
1.0
2.0
3.0
4.0
5.0
6.0
7.0
8.0
9.0
PPM SILICON ON ZINC

FIGURE 3

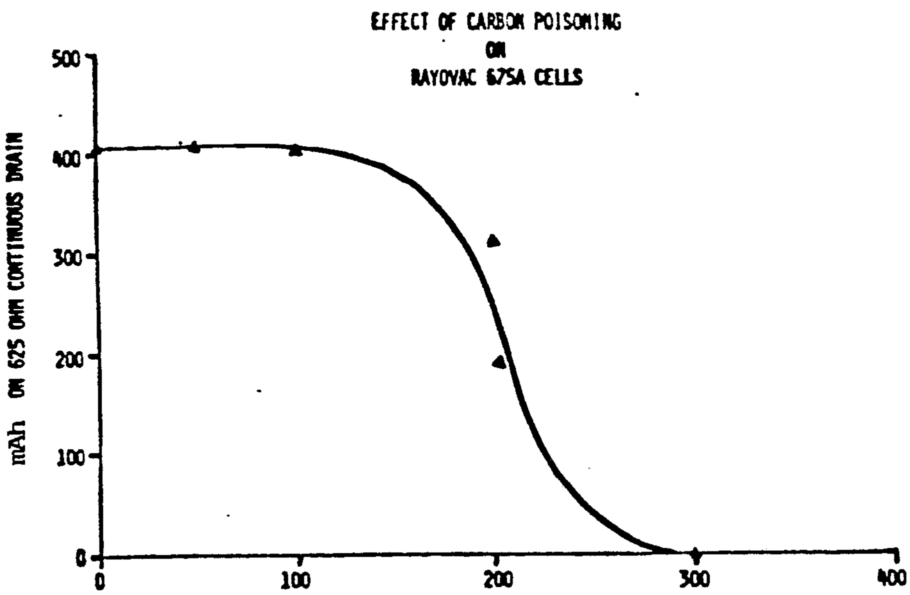


PPM CARBON IN ZINC

FIGURE 4

ANTIDOTE ACTION OF DIMETHYL POLYSILOXANES

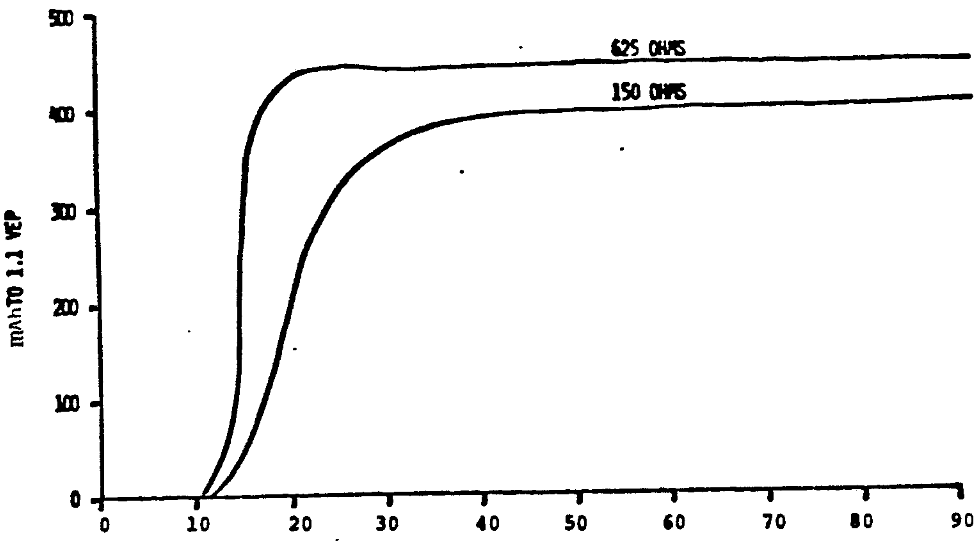


PPM SILICON ON ZINC POISONED WITH 300 PPM CARBON

FIGURE 5